Europäisches Patentamt

European Patent Office

Office européen des brevets

(19)

(11) **EP 1 559 736 A1**

(12) **EUROPEAN PATENT APPLICATION**
published in accordance with Art. 158(3) EPC

(43) Date of publication:
**03.08.2005 Bulletin 2005/31**

(21) Application number: **03754015.0**

(22) Date of filing: **08.10.2003**

(51) Int Cl.[7]: **C08J 3/20**, C08L 101/00,
C08K 3/00

(86) International application number:
**PCT/JP2003/012863**

(87) International publication number:
**WO 2004/033538 (22.04.2004 Gazette 2004/17)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **10.10.2002 JP 2002297942**

(71) Applicant: **FA. M INC.
Osaka-shi, Osaka 547-0001 (JP)**

(72) Inventors:
• **MIYAMA, Shigetoshi
 Osaka-shi, Osaka 547-0001 (JP)**
• **IWAMOTO, Koji
 Osaka-shi, Osaka 547-0001 (JP)**

(74) Representative: **VOSSIUS & PARTNER
Siebertstrasse 4
81675 München (DE)**

(54) **PROCESS FOR THE PRODUCTION OF RESIN COMPOSITIONS**

(57)     A manufacturing process for a resin composition is provided, whereby it is possible to homogeneously knead particles and low-temperature decomposable additives into resins. First of all, a thermoplastic resin and an additive are pre-heated and mixed together, after which transition to the kneading step is carried out while the mixture is maintained in a heated state. Then, the mixture is kneaded under heating and molded by extrusion molding or the like to obtain the target resin composition. In the present invention, additives used in particulate form are not liable to cake and can be homogeneously kneaded in because the transition to the kneading step is carried out while the mixture is maintained in a heated state. Moreover, it is possible to knead in low-temperature decomposable additives because the heating temperature used for kneading can be reduced significantly in comparison with the conventional art.

EP 1 559 736 A1

**Description**

TECHNICAL FIELD

This invention relates to a manufacturing process for resin compositions.

BACKGROUND ART

As a resin possessing flame resistance, vinyl chloride has been used widely for applications such as electric cable coatings in the past, but in recent years, there is a tendency for halogen-containing polymers to be banned from such applications out of concern over environmental problems.

In applications such as those mentioned above, one of the methods of using halogen-free polymers instead of vinyl chloride is the method of kneading an inorganic flame retardant such as magnesium hydroxide or aluminum hydroxide into a polyolefin resin. It is important, however, to strike a balance between flame resistance and mechanical strength because the addition of a large amount of an inorganic flame retardant for the purpose of increasing flame resistance brings about a decrease in the resin's mechanical strength, for example. In particular, sufficient flame resistance still might not be achieved and a decrease in mechanical strength might be experienced if an inorganic flame retardant is not homogeneously kneaded into a resin.

It is believed that when, for instance, the above-mentioned magnesium hydroxide and aluminum hydroxide, etc. are utilized as inorganic flame retardants, the mechanical strength of the resin composition is not prone to decrease and flame resistance can be achieved even at lower dosages because the specific surface area will increase if the particle size of the retardants is made as small and uniform as possible. However, as the particle size of a powder becomes smaller, homogeneously kneading it into a resin actually becomes more difficult because moisture absorption is liable to cause caking, as a result of which flame resistance still may not be achieved and mechanical strength may decrease. Moreover, although aluminum hydroxide is a substance that is both inexpensive and offers superior flame resistance and other performance characteristics as a flame retardant, kneading it into a resin with a high melting point, such as polyprolpylene, is particularly complicated because it decomposes at a relatively low temperature.

DISCLOSURE OF THE INVENTION

Therefore, it is an object of the present invention to provide a manufacturing process for a resin composition that permits, for instance, microparticles and low-temperature decomposable additives to be kneaded homogeneously into resins.

In order to solve the above-mentioned problem, the manufacturing process of the present invention is a manufacturing process for a resin composition comprising a kneading step of kneading thermoplastic resin and additives under heating, in which the manufacturing process further comprises a preliminary step of pre-heating and mixing the thermoplastic resin and additives prior to the kneading step, and transition of the mixture obtained in the preliminary step to the kneading step is carried out while maintaining the temperature reached at the end of the preliminary step and then kneading is carried out, or the mixture obtained in the preliminary step is transitioned to the kneading step in a heated state at a reduced temperature that is lower than the temperature reached at the end of the preliminary step, and then kneaded.

BRIEF DESCRIPTION OF THE DRAWINGS

FIG. 1 is a graph illustrating the particle size distribution of natural magnesium hydroxide.
FIG. 2 is a graph illustrating a particle size distribution obtained after grinding the natural magnesium hydroxide of FIG. 1.

BEST MODE OF CARRYING OUT THE INVENTION

Embodiments of the present invention are described next.

The mixing of thermoplastic resins with additives prior to kneading was practiced in the past, but because a heated mixture was hard to handle, at the time of transition to the kneading step, it used to be charged to an extruding machine or the like at room temperature and then kneaded. For this reason, in some cases, as described above, caking of the additive particles occurred and homogeneous kneading presented difficulties. Also, since the caked additive particles obstructed heat conduction, it was necessary to raise the heating temperature of the above-mentioned extruding machine or the like significantly above the melting point of the resin during kneading, thereby creating the risk of causing thermal decomposition of the additive.

The manufacturing process of the present invention, however, is not liable to bring about the caking of the additive particles because the transition to the kneading step is carried out while the mixture is in a heated state, and then kneading is carried out. It is believed that the reasons for this phenomenon lie, for example, in the absence of moisture absorption-induced caking due to dehydration of the mixture by heating. In addition, in the manufacturing process of the present invention, heating during kneading is minimal in comparison with conventional methods because all of the mixture is pre-heated when it is transitioned to kneading. For this reason, it is not likely to cause decomposition of additives by temperature. Furthermore, as described above, when proceeding to the step of kneading the mixture, the transition to the kneading step may be carried out while maintaining the temperature reached at the end of the preliminary step. However, the transition to the kneading step also may be carried out in a heated state at an appropriately reduced temperature. For instance, when using additives that decompose if left standing at an elevated temperature for an extended period of time, it is preferable that the transition to the kneading step is carried out by lowering the temperature to a temperature at which the additives do not decompose and kneading is easy. Specifically, if the temperature of the mixture at the end of the preliminary step is X ($°C$) and the temperature of the mixture at the time of transition to the kneading step is Y ($°C$), it is preferable that the condition of the formula (I) below is satisfied

$$0 \leq (X-Y) \leq 100 \tag{I}$$

The value of (X-Y) is, more preferably, 50 or less, and especially preferably, 20 or less.

It is preferable that the additives comprise, e.g., an inorganic flame retardant.

For the inorganic flame retardant, it is more preferable if the ratio Mn/Mw of the number-average particle size Mn to the weight-average particle size Mw is in the range of 0.2 to 1.0, and it is especially preferable if Mn/Mw is in the range of 0.4 to 1.0. In addition, it is preferable that the percentage content of particles with a particle size of 0.70 to 15.0 $\mu$m is at least 90.0%, it is more preferable that the content of particles with a particle size of 1.0 to 10.0 $\mu$m is at least 90.0%, and it is especially preferable that the content of particles with a particle size of 1.0 to 10.0 $\mu$m is at least 95.0%. In this manner, by reducing particle size variation and making the particles smaller, the kneaded state of the resin composition is rendered more homogeneous and, furthermore, flame resistance is made easier to achieve and mechanical strength less likely to decrease.

In addition, it is more preferable that the inorganic flame retardants are made of microparticulates obtained by grinding using fluid shear forces generated by rotating two opposed rotors in the same direction or in opposing directions. Grinding in accordance with this method allows for obtaining microparticulates with little particle size variation. There are no particular limitations concerning the equipment that can be used in this method, which includes, for instance, the Tornado Mill™, Models 250 and 400, etc. made by Nikkiso Co., Ltd. Because the grinding method is a grinding method that utilizes fluid shear forces and particles practically never collide with the main body of the apparatus, particles of a small and uniform particle size are easier to obtain in comparison with conventional grinding methods utilizing jet mills, rotary mills, or the like.

Although there are no particular limitations concerning the mixing ratio of the inorganic flame retardants and the thermoplastic resin, in terms of weight proportion, the thermoplastic resin should be in the range of 0.5 to 1,000 parts, and, preferably, in the range of 5 to 20 parts per 1 part of the inorganic flame retardants. In addition, while there are no particular limitations concerning the type of the inorganic flame retardants, which may be of any kind whatsoever, it is preferable that the retardant comprises at least one retardant selected from the group consisting of, for instance, metal hydroxides, metal carbonates, red phosphorus, and flexible graphite, and it is even more preferable that they comprise at least one retardant selected from the group consisting of magnesium hydroxide, aluminum hydroxide, calcium hydroxide, calcium carbonate, red phosphorus, and flexible graphite. In addition, although red phosphorus and flexible graphite can be used as flame retardants alone, it is possible to use, for instance, at least one of either red phosphorus or flexible graphite together with at least one of either metal hydroxides or metal carbonates. In comparison with using a metal hydroxide or a metal carbonate alone, using at least either one of red phosphorus or flexible graphite in combination therewith is preferable because this produces effects such as the ability to decrease the amount of the metal hydroxides or metal carbonates and a further improvement in the physical properties of the resin compositions. In this case, there are no particular limitations concerning the amount of either red phosphorus or flexible graphite, which is, for example, 0.1 to 20 wt% relative to the thermoplastic resin. For instance, when magnesium hydroxide and flexible graphite are used in combination, the amount of the utilized magnesium hydroxide can be reduced to approximately 80% and the mechanical strength etc. of resin compositions is further improved in comparison with cases in which flexible graphite is not utilized.

The melting point of the thermoplastic resins used in the manufacturing process of the present invention is, for example, 70 to 350$°C$, preferably, 80 to 270$°C$, and more preferably, 100 to 200$°C$. In addition, while the type of the thermoplastic resins is not particularly limited, it is preferable that the resins comprise at least one resin selected from the group consisting of, for instance, polyolefins, acrylonitrile-butadiene-styrene copolymers (ABS), acrylonitrile-styrene copolymers (AS), polystyrene (PS), polyesters, thermoplastic elastomers (thermoplastic elastomers, i.e TPE), and thermoplastic urethanes (thermoplastic urethanes, i.e TPU). Also, polyolefins are sometimes called thermoplastic olefins (thermoplastic olefins, i.e. TPO). TPO can be either homopolymers or copolymers of olefins, specifically, for instance, polyethylene (PE), polypropylene (PP), or copolymers of PE and PP, etc.

It is more preferable that the polyolefins comprise at least one of either polyethylene (PE) or polypropylene (PP), and it is more preferable that the polyesters comprise at least one compound selected from the group consisting of polyethylene terephthalate (PET), polylactic acid, and polyhydroxybutyrate (PHB).

When biodegradability is required of the thermoplastic resins, it is preferable to use biodegradable resins. As far as examples of the biodegradable resins are concerned, polyester-based biodegradable resins are preferable, polylactic acid-based biodegradable resins are more preferable, and polylactic acid and polyhydroxybutyrate are especially preferable.

In resin compositions prepared in accordance with the manufacturing process of the present invention, the inorganic flame retardants preferably comprise magnesium hydroxide, with the particle size of the magnesium hydroxide particles preferably being fine and uniform. Additionally, in another example, the inorganic flame retardants preferably comprise aluminum hydroxide and magnesium hydroxide, with the particle size of the particles of at least either one of aluminum hydroxide or magnesium hydroxide preferably being fine and uniform. In yet another example, it is preferable that the inorganic flame retardants comprise flexible graphite and magnesium hydroxide. While the preferred examples of the thermoplastic resins contained in the resin compositions are as described above, from the standpoint of heat resistance, mechanical strength, etc., it is preferable for them to comprise, for instance, polypropylene.

Although resin compositions such as the ones described above may be prepared using manufacturing processes other than the manufacturing process of the present invention, preparing them in accordance with the process of the present invention permits homogeneous kneading of easily pyrolyzable aluminum hydroxide particles and caking-prone microparticles into resins, which allows for obtaining high flame resistance and mechanical strength. Also, while there are no particular limitations concerning the applications of such resin compositions, it is preferable to use them, for instance, in electric cable coatings, because electric cables with such coatings exhibit excellent heat resistance, impact resistance, abrasion resistance, etc.

The additives that can be kneaded in accordance with the manufacturing process of the present invention are not limited to inorganic flame retardants, and various other additives may be used as well. It is preferable that the additives comprise, for instance, at least one additive selected from the group consisting of ore powders, organic substances, plant tissue-derived powders, carbon powders, inorganic salts, and pigments, and it is more preferable for them to comprise at least one additive selected from the group consisting of ground tourmaline, tartaric acid, ground *wasabi* horseradish, ground soybean residues, ground red pepper, ground black pepper, ground *matsutake* mushrooms, ground *shiitake* mushrooms, wood flour, ground paper, ground tea leaf waste, ground coffee residues, carbon black, talc, ground wood charcoal, ground bamboo charcoal, ground cacao bean shells, organic pigments, inorganic pigments, and calcium carbonate. Although kneading wood flour, paper, and tea leaf waste, etc. into resin presents problems because they may cause carbonization and combustion under heating, the manufacturing process of the present invention, which makes it possible to minimize heating during kneading, allows for kneading them into resins with a high melting point such as, for instance, polypropylene, etc. Additionally, bincho charcoal [Japanese white charcoal made of ubame-gashi (ilex). - trans.] is preferable for use as wood charcoal.

Because they permit inclusion of heat-sensitive additives and additives in microparticulate form, whose introduction in resin compositions presented difficulties in the past, resin compositions prepared in accordance with the manufacturing process of the present invention and resin products utilizing them achieve various unique effects depending on the type of the additives. For instance, inorganic flame retardants are used as additives in the manner described above.

As another example, effective recycling of waste wood is made possible because waste wood can be used effectively as a filler for resin compositions and resin compositions of superior mechanical strength can be prepared by grinding waste wood or the like and kneading it into resin in accordance with the manufacturing process of the present invention.

In yet another example, resin compositions possessing antibacterial and aromatic properties can be prepared by kneading in ground tea leaf waste, which has been difficult to knead into resin using conventional methods. Furthermore, in still another example, by kneading in ground *wasabi* horseradish, resin compositions can be prepared that have anti-mildew, anti-microbial, deodorant, insecticidal, and freshness-preserving effects, etc., and such resin compositions, as wells as resin products utilizing them, can be used for foodstuffs and pet-related applications. Although the handling of tea leaf waste, ground *wasabi* horseradish, etc., which consist of fine fragments and microparticles, is difficult in raw form, kneading them into resin offers advantages such as a significant improvement in terms of convenience and an improvement in storage properties. Their inclusion in resin compositions is made possible by the present invention. Thus, one of the advantages of the present invention is an improvement in convenience, etc. afforded by mixing resin compositions with substances whose handling in raw form has been burdensome and which conventionally have been difficult to introduce into resin compositions.

In addition, as described above, the resin compositions of the present invention and resin products utilizing them also offer various unique effects depending on the type of the additive.

Specifically, the manufacturing process of the present invention can be practiced, for example, in the following manner. The present invention, however, is not limited to this example.

First of all, a preliminary step of pre-heating and mixing a thermoplastic resin and additives is carried out. There are no particular limitations concerning the equipment used for the preliminary step, which can be conducted using, for instance, a Henschel Mixer (trade name) from Mitsui Mining Co., Ltd.

While there are no particular limitations concerning the heating temperature used in the preliminary step, from the standpoint that the additives are not liable to decompose and with account taken of the ease of the subsequent kneading steps, the temperature is set, for instance, to 100 to 250°C, preferably, 120 to 230°C, and even more preferably, 140 to 200°C. Moreover, from the above-mentioned standpoint, the temperature is preferably a temperature which, for example, is equal to, or slightly lower than, the melting point of the thermoplastic resin. Specifically, if the heating temperature of the preliminary step is Z (°C) and the melting point of the thermoplastic resin is T (°C), Z is preferably in the range indicated by the formula (II) below

$$(T - 50) \leq Z \leq T \qquad\qquad (II).$$

Also, more preferably, $(T-30) \leq Z \leq T$, and, especially preferably, $(T-10) \leq Z \leq T$.

The heating temperature Z (°C) of the preliminary step is, for instance, 50 to 220°C, preferably, 70 to 200°C, and even more preferably, 90 to 190°C when using polyolefins. It is, for instance, 80 to 200°C, preferably 100 to 180°C, and even more preferably 120 to 180°C when using polypropylene. It is, for instance, 60 to 180°C, preferably 80 to 160°C, and even more preferably 100 to 160°C when using polyethylene. Although there are no particular limitations concerning the stirring speed, whenever possible, a higher speed is preferable because it enables efficient homogeneous mixing and eliminates temperature distribution irregularities in the mixture. When using the Henschel mixer, the stirring speed is, for instance, 400 to 1000 rpm. Although the duration of mixing under heating is not particularly limited either and it is sufficient to set it according to the type etc. of the additive and thermoplastic resin, from the standpoint of mixing and heating without irregularities, the time is, for instance, 2 to 60 minutes, preferably, 4 to 45 minutes, and especially preferably, 5 to 30 minutes. While it is preferable that thermoplastic resins be used in powder form to ensure easy homogeneous mixing with additives, it is also quite possible to achieve homogeneous mixing even if they are used in pelletized or other forms.

Next, the procedure moves on to the kneading step immediately or after the temperature of the mixture obtained in the preliminary step is appropriately reduced. Although there are no particular limitations concerning the temperature of the mixture when it is transitioned to the kneading step and it is sufficient to set it according to the type of the additives and thermoplastic resin, it is, for instance, 30 to 200°C, preferably 40 to 180°C, and even more preferably 50 to 160°C. Depending on the type of the additives, the preferable temperature of the mixture when it is transitioned to the kneading step is, for instance, as follows. Namely, when the mixture contains, for example, inorganic flame retardants as additives, the temperature is preferably 50 to 150°C, more preferably 60 to 140°C, and especially preferably 70 to 130°C. When it contains magnesium hydroxide, the temperature is preferably 50 to 150°C, more preferably 60 to 140°C, and especially preferably 70 to 130°C. When it contains magnesium hydroxide and aluminum hydroxide, the temperature is preferably 50 to 130°C, more preferably 60 to 120°C, and especially preferably 70 to 110°C. When it contains plant tissue-derived powders, the temperature is preferably 30 to 100°C, more preferably 40 to 90°C, and especially preferably 40 to 80°C. When it contains wood flour, the temperature is preferably 50 to 100°C, more preferably 50 to 90°C, and especially preferably 50 to 80°C. In particular, when kneading in wood flour, ground tea leaf waste, ground *wasabi* horseradish, and other plant tissue-derived powders, the transition to the kneading step is preferably carried out after cooling the mixture down to a suitable temperature, because carbonization and combustion, etc. may occur if the plant tissue-derived powders are allowed to stand at an elevated temperature over an extended period of time. Also, the preferred working examples of the thermoplastic resins used in the mixture are as described above and it is preferable that they comprise, for instance, at least either one of polyethylene or polypropylene.

Then, the mixture is kneaded under heating and molded by extrusion molding or the like, obtaining the target resin composition. The equipment used at such time is not particularly limited. For instance, screw molding machines, plunger molding machines, sheet molding machines, profile extrusion machines, blown film molding machines, press-molding machines, and calendering machines can be appropriately used. There are no particular limitations on the method of molding either. For instance, the strand-cutting method, hot-cutting method, semi-underwater cutting method, water-cutting method, and sheet-cutting method, etc. can be used as appropriate. In addition, other additives such as, for instance, low molecular weight lubricants, etc., may be added to the mixture during the above-mentioned kneading under heating.

There are no particular limitations concerning the heating temperature used during the above-mentioned kneading under heating, which is, for example, 80 to 350°C, preferably 90 to 280°C, and even more preferably 100 to 210°C. The preferred temperature range varies depending on the type of the additive and thermoplastic resin, so that, for instance, for a combination of polypropylene and magnesium hydroxide or polypropylene and wood flour, the range is 160 to 300°C, preferably 160 to 280°C, and even more preferably 170 to 250°C. The present invention can minimize heating during the above-mentioned kneading under heating because the mixture is pre-heated in advance. For instance, it is preferable to carry out the transition to the above-mentioned step of kneading under heating in a state in which all of the mixture has been pre-heated in advance to a temperature that is slightly lower than the softening temperature of the thermoplastic resin and the thermoplastic resin has been homogeneously mixed with the additives. In such a state, during the above-mentioned step of kneading under heating, the thermoplastic resin can be melted simply by slightly pressurizing it in a screw extruding machine or the like so as to bring the mixture into a kneadable state. Molding is complete when the mixture that has been brought into this kneadable state is extruded from a screw extruding machine or the like. In the present invention, by doing so, kneading can be performed substantially without stirring and at a considerably lower temperature than in conventional kneading methods.

WORKING EXAMPLES

Working Examples of the present invention are explained next.

Working Example 1

A resin composition containing wood flour kneaded into polypropylene (PP) was produced by the following method. First of all, a stirrer was prepared for use. The stirrer, which was built by subjecting the entire inner surface of the above-noted Henschel mixer to plating treatment to form an undulating pattern of grooves and ridges thereon and increasing its rotational speed to 1.7 times the normal speed by replacing the pulley, could be used in the same manner as an ordinary Henschel mixer.

Next, after heating the stirrer to 200°C, 51 kg dry wood flour (100 mesh pass, bulk density: approximately 0.23 g/cm$^3$) and 49 kg PP pellets (Idemitsu Petrochemical Co., Ltd., trade name PN640, bulk density: approximately 0.62 g/cm$^3$) were placed inside it and stirring was started. As the stirring progressed, molten PP pellets collided with the above-noted groove-and-ridge pattern on the inner surface of the Henschel mixer, thereby forming a melt film (a microscopic thin film of PP). The stirring was stopped when the gradual formation of the melt film was complete and a homogeneous stirred mixture of the PP melt film and wood flour had been formed. At that moment, the bulk density of the stirred mixture was 0.3 to 0.4 g/cm$^3$ and the temperature was in the range of 100 to 300°C. Then, the stirred mixture was immediately charged to a cooling mixer and cooled. The cooling was carried out by cooling the jacket of the cooling mixer with the help of a chiller (a water-cooling apparatus) while stirring the stirred mixture with stirring blades.

Then, when the temperature of the stirred mixture reached 100°C, it was charged to a screw molding machine (made by Nakatani Machinery Co., Ltd., trade name NVC-100), which had been pre-heated to 100°C in advance, and granulated by extrusion by the hot-cutting method, producing the target resin composition. The content of wood flour in the resin composition was 51 wt%. Extrusion granulation was carried out at C1 to C7 = 180, D = 200, a screw speed of 120 rpm, and an output rate of 170 kg/h. Visual surface examination confirmed that polypropylene and wood flour had been homogeneously kneaded together in the resin composition.

Working Examples 2 to 16

The various conditions described in Working Example 1 were adapted in order to prepare a number of resin compositions containing wood flour. Preparation was carried out in the same manner as in Working Example 1 except for using at least one of conditions (1) to (3) described below.

(1) The wood flour content was set to 20 wt%, 30 wt% or 40 wt% instead of 51 wt%.
(2) Polyethylene (PE) or recycled bumper (RB) material were used instead of PP.
(3) A plunger molding machine was used instead of a screw molding machine.

It was confirmed that resin and wood flour were homogeneously kneaded together in the resin compositions of Working Examples 2 to 16, in the same manner as in Working Example 1.

The tensile strength (MPa), flexural strength (MPa), flexural modulus (MPa), and Izod impact value (kJ/m$^2$)

of the resin compositions of the Working Examples 1 to 16 were measured. In addition, similar measurements were carried out on polypropylene (unused polypropylene) and recycled bumper material before any wood flour was added thereto. The tensile strength, flexural strength, and flexural modulus were measured at a support span of 5 cm, a chart speed 5 of cm/min, and a bending speed 0.5 cm/min. The results are shown in Table 1 below. Each measurement value is an average of values obtained by measuring the respective parameter three times. The PP, PE, and RB indicated next to the working example number show the respective use of polypropylene, polyethylene, and recycled bumper material, and the numbers indicated next to them represent the content (wt%) of wood flour, with the adjacent "s" and "p" showing respectively, that molding was carried out using a screw molding machine or a plunger molding machine. For instance, (PP, 51, s) designates a polypropylene composition containing 51 wt% of wood flour and molded in a screw molding machine.

Table 1

| Working Example No. | Tensile Strength | Flexural strength | Flexural modulus | Impact value |
|---|---|---|---|---|
| 1(PP,51,s) | 19.9 | 35.0 | 2710 | 4.2 |
| 2(PP,51,p) | 21.9 | 35.5 | 2623 | 3.9 |
| 3(PP,40,p) | 23.6 | 36.6 | 2459 | 4.2 |
| 4(PP,30,p) | 26.2 | 38.6 | 2116 | 5.0 |
| 5(PP,20,p) | 25.1 | 39.3 | 2073 | 4.8 |
| Comparative Example 1 (PP only) | 28.9 | 35.5 | 1032 | 7.7 |
| 6(RB,51,s) | 11.1 | 23.6 | 2060 | 4.5 |
| 7(RB,51,p) | 14.3 | 24.1 | 2172 | 4.9 |
| 8(RB,40,p) | 16.0 | 25.5 | 2038 | 5.5 |
| 9(RB,30,p) | 16.5 | 26.0 | 1909 | 5.6 |
| 10(RB,20,p) | 17.2 | 27.0 | 1870 | 6.2 |
| Comparative Exemple 2 (RB only) | 19.0 | 29.4 | 1218 | 33.6 |
| 11(PE,51,s) | 14.2 | 14.3 | 613 | 9.6 |
| 12(PE,51,p) | 13.4 | 13.8 | 497 | 14.0 |
| 13(PE,40,s) | 14.1 | 14.5 | 757 | 6.7 |
| 14(PE,30,s) | 13.9 | 14.4 | 622 | 9.4 |
| 15(PE,20,s) | 15.2 | 13.3 | 444 | 13.5 |
| 16(PE,20,p) | 16.7 | 12.1 | 313 | 21.3 |

As can be seen from Table 1, when PP or RB were used, the resultant tensile strength and flexural strength were not much different from the pre-kneading values even with 20 to 51 wt% of wood flour kneaded into the resin. Additionally, the flexural modulus was greatly improved in comparison with the pre-kneading level. That is to say, it seems that the mechanical strength increased because the condition of the resin compositions of the Working Examples 1 to 16 was homogeneous and dense as a result of preparation in accordance with the manufacturing process of the present invention. In addition, it was found that equally excellent results were obtained when using both screw molding machines and plunger molding machines. Also, when compositions stirred under heating in the Henschel mixer were cooled to room temperature and charged to a molding machine for kneading, attempts to melt the polypropylene by heating in the molding machine caused wood flour carbonization to occur and the kneading was not successful.

Working Examples 17 to 20

Resin compositions containing polypropylene and magnesium hydroxide powder were prepared next. First of all, magnesium hydroxide (natural magnesium hydroxide from China, purchased from Fuji Talc Industrial Co., Ltd.) was prepared for use and then ground using the above-mentioned Tornado Mill 250, producing a fine powder of magnesium hydroxide. The grinding was carried out by setting the above-mentioned Tornado Mill 250 to use a rotor diameter of 250 mm, six blades, a motor capacity of 7.5 kW×2, and a rotor speed of 7,000 rpm.

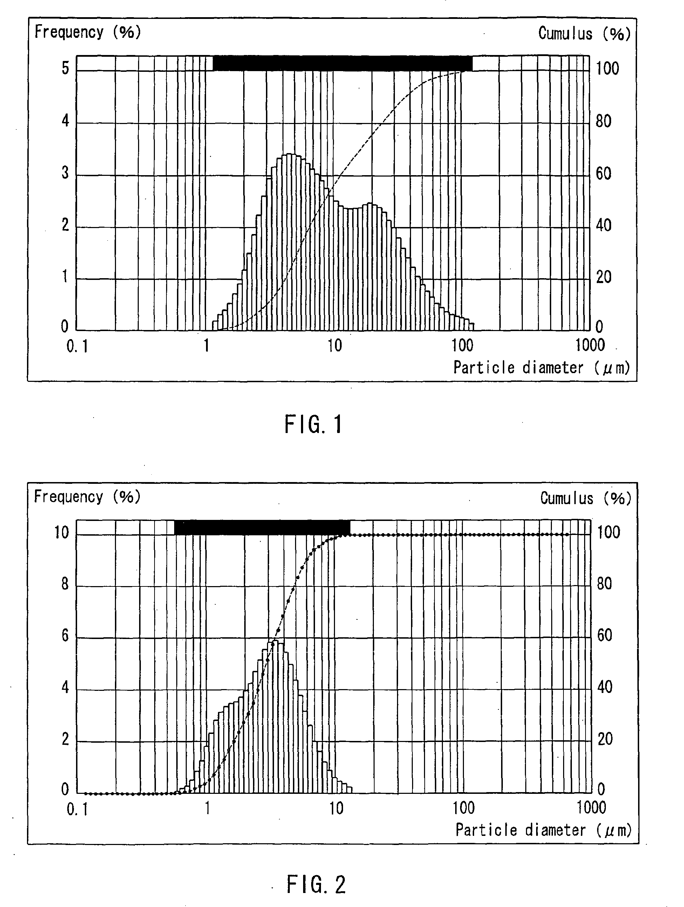

In addition, the pre-grinding and post-grinding particle size distribution of the above-mentioned magnesium hydroxide was measured using equipment from Nikkiso Co., Ltd. (trade name: Model 9320-X100.) In graph form, FIG. 1 shows the pre-grinding measurement results and FIG. 2 shows the post-grinding measurement results. A synopsis of the measurement results shown in the above-mentioned figures is also shown below in numerical form.

| Synopsis of FIG. 1 | |
|---|---|
| Summary Data | % Data (μm) |
| dv=0.1470 | 10%=2.7312 |
| mv=14.644 (μm) | 20%=3.6616 |
| mn=2.4874 (μm) | 30%=4.7232 |
| ma=5.9918 (μm) | 40%=6.1091 |
| cs=1.0014 (m$^2$) | 50%=8.0731 |
| sd=11.669 (μm) | 60%=11.157 |
| | 70%=16.002 |
| | 80%=22.816 |
| | 90%=34.510 |
| | 95%=47.675 |

| Peak Data | | | |
|---|---|---|---|
| Peak No. | Median diameter | Volume % | Width |
| 1 | 25.879 | 33.180 | 29.242 |
| 2 | 5.1503 | 66.820 | 6.9837 |

Measurement Conditions
(Settings for the above-mentioned Model 9320-X100)
      Substance:
      Transparency: Transp
      Spherical Particles: No
      Part. Refractive Index: 1.81
      Solvent:
      Fluid Refractive Index: 1.38
      Run time: 30
      Loading Index: 0.8265
      Laser Intensity:
      1.0003 / 0.9992 / 0.9947
      Laser Power Level:
      1.0003 / 0.9995 / 0.9944
      Range: 0.1220 to 704.00
      R. Range: 1.1562 to 124.45
      Distribution form: Volume distribution
      Sieve: Bottom
      Arbitrary particle size: No
      Particle size class: Standard

| Synopsis of FIG. 2 | |
|---|---|
| Summary Data | % Data (μm) |
| dv=0.0988 | 10%=1.2470 |
| mv=3.3446 (μm) | 20%=1.6222 |
| mn=1.3208 (μm) | 30%=2.0508 |
| ma=2.3755 (μm) | 40%=2.4996 |
| cs=2.5258 (m$^2$) | 50%=2.9455 |
| sd=1.8385 (μm) | 60%=3.4204 |
| | 70%=3.9771 |
| | 80%=4.7215 |
| | 90%=5.9647 |
| | 95%=7.2197 |

| Peak Data | | | |
|---|---|---|---|
| Peak No. | Median diameter | Volume % | Width |
| 1 | 2.9455 | 100.00 | 3.6567 |

Measurement Conditions
(Settings for the above-mentioned Model 9320-X100)

Substance:
Transparency: Transp
Spherical Particles: No
Part. Refractive Index: 1.81
Solvent:
Fluid Refractive Index: 1.38
Run time: 30
Loading Index: 0.7877
Laser Intensity:
1.0005 / 0.9995 / 0.9944
Laser Power Level:
1.0003 / 0.9995 / 0.9945
Range: 0.1220 to 704.00
R. Range: 0.5781 to 13.081
Distribution form: Volume distribution
Sieve: Bottom
Arbitrary particle size: No
Particle size class: Standard

In addition, the particle size distribution of the graph of FIG. 1 is shown in the following Table 2 and the particle size distribution of the graph of FIG. 2 is shown in the following Table 3.

## Table 2

| Ch. | Part. size | Cumul. | Frequency | Ch. | Part. size | Cumul. | Frequency | Ch. | Part. size | Cumul | Frquency | Ch. | Part. size | Cumul | Frequency |
|---|---|---|---|---|---|---|---|---|---|---|---|---|---|---|---|
| 1 | 704.00 | 100.00 | 0.00 | 26 | 80.696 | 98.82 | 0.38 | 51 | 9.2499 | 54.43 | 2.77 | 76 | 1.0603 | 0.00 | 0.00 |
| 2 | 645.57 | 100.00 | 0.00 | 27 | 73.999 | 98.44 | 0.45 | 52 | 8.4822 | 51.66 | 2.91 | 77 | 0.9723 | 0.00 | 0.00 |
| 3 | 591.99 | 100.00 | 0.00 | 28 | 67.857 | 97.99 | 0.55 | 53 | 7.7782 | 48.75 | 3.04 | 78 | 0.8916 | 0.00 | 0.00 |
| 4 | 542.86 | 100.00 | 0.00 | 29 | 62.225 | 97.44 | 0.66 | 54 | 7.1326 | 45.71 | 3.15 | 79 | 0.8176 | 0.00 | 0.00 |
| 5 | 497.80 | 100.00 | 0.00 | 30 | 57.061 | 96.78 | 0.78 | 55 | 6.5406 | 42.56 | 3.25 | 80 | 0.7497 | 0.00 | 0.00 |
| 6 | 456.49 | 100.00 | 0.00 | 31 | 52.325 | 96.00 | 0.92 | 56 | 5.9978 | 39.31 | 3.33 | 81 | 0.6875 | 0.00 | 0.00 |
| 7 | 418.60 | 100.00 | 0.00 | 32 | 47.982 | 95.08 | 1.08 | 57 | 5.5000 | 35.98 | 3.39 | 82 | 0.6304 | 0.00 | 0.00 |
| 8 | 383.86 | 100.00 | 0.00 | 33 | 44.000 | 94.00 | 1.25 | 58 | 5.0435 | 32.59 | 3.42 | 83 | 0.5781 | 0.00 | 0.00 |
| 9 | 352.00 | 100.00 | 0.00 | 34 | 40.348 | 92.75 | 1.44 | 59 | 4.6249 | 29.17 | 3.43 | 84 | 0.5301 | 0.00 | 0.00 |
| 10 | 322.79 | 100.00 | 0.00 | 35 | 36.999 | 91.31 | 1.63 | 60 | 4.2411 | 25.74 | 3.41 | 85 | 0.4861 | 0.00 | 0.00 |
| 11 | 296.00 | 100.00 | 0.00 | 36 | 33.929 | 89.68 | 1.82 | 61 | 3.8891 | 22.33 | 3.35 | 86 | 0.4458 | 0.00 | 0.00 |
| 12 | 271.43 | 100.00 | 0.00 | 37 | 31.113 | 87.86 | 2.00 | 62 | 3.5663 | 18.98 | 3.20 | 87 | 0.4088 | 0.00 | 0.00 |
| 13 | 248.90 | 100.00 | 0.00 | 38 | 28.530 | 85.86 | 2.16 | 63 | 3.2703 | 15.78 | 2.96 | 88 | 0.3749 | 0.00 | 0.00 |
| 14 | 228.24 | 100.00 | 0.00 | 39 | 26.163 | 83.70 | 2.31 | 64 | 2.9989 | 12.82 | 2.64 | 89 | 0.3437 | 0.00 | 0.00 |
| 15 | 209.30 | 100.00 | 0.00 | 40 | 23.991 | 81.39 | 2.40 | 65 | 2.7500 | 10.18 | 2.27 | 90 | 0.3152 | 0.00 | 0.00 |
| 16 | 191.93 | 100.00 | 0.00 | 41 | 22.000 | 78.99 | 2.45 | 66 | 2.5218 | 7.91 | 1.90 | 91 | 0.2891 | 0.00 | 0.00 |
| 17 | 176.00 | 100.00 | 0.00 | 42 | 20.174 | 76.54 | 2.46 | 67 | 2.3125 | 6.01 | 1.54 | 92 | 0.2651 | 0.00 | 0.00 |
| 18 | 161.39 | 100.00 | 0.00 | 43 | 18.500 | 74.08 | 2.45 | 68 | 2.1205 | 4.47 | 1.22 | 93 | 0.2431 | 0.00 | 0.00 |
| 19 | 148.00 | 100.00 | 0.00 | 44 | 16.964 | 71.63 | 2.42 | 69 | 1.9445 | 3.25 | 0.96 | 94 | 0.2229 | 0.00 | 0.00 |
| 20 | 135.71 | 100.00 | 0.00 | 45 | 15.556 | 69.21 | 2.39 | 70 | 1.7832 | 2.29 | 0.74 | 95 | 0.2044 | 0.00 | 0.00 |
| 21 | 124.45 | 100.00 | 0.14 | 46 | 14.265 | 66.82 | 2.38 | 71 | 1.6352 | 1.55 | 0.57 | 96 | 0.1874 | 0.00 | 0.00 |
| 22 | 114.12 | 99.86 | 0.22 | 47 | 13.081 | 64.44 | 2.40 | 72 | 1.4994 | 0.98 | 0.43 | 97 | 0.1719 | 0.00 | 0.00 |
| 23 | 104.65 | 99.64 | 0.23 | 48 | 11.996 | 62.04 | 2.44 | 73 | 1.3750 | 0.55 | 0.34 | 98 | 0.1576 | 0.00 | 0.00 |
| 24 | 95.965 | 99.41 | 0.27 | 49 | 11.000 | 59.60 | 2.53 | 74 | 1.2609 | 0.21 | 0.21 | 99 | 0.1445 | 0.00 | 0.00 |
| 25 | 88.000 | 99.14 | 0.32 | 50 | 10.087 | 57.07 | 2.64 | 75 | 1.1562 | 0.00 | 0.00 | 100 | 0.1325 | 0.00 | 0.00 |

EP 1 559 736 A1

Table 3

| Ch. | Part. size | Cumul. | Frequency | Ch. | Part. size | Cumul. | Frequency | Ch. | Part. size | Cumul. | Frquency | Ch. | Part. size | Cumul | Frequency |
|---|---|---|---|---|---|---|---|---|---|---|---|---|---|---|---|
| 1 | 704.00 | 100.00 | 0.00 | 26 | 80.696 | 100.00 | 0.00 | 51 | 9.2499 | 98.40 | 0.87 | 76 | 1.0603 | 5.21 | 1.82 |
| 2 | 645.57 | 100.00 | 0.00 | 27 | 73.999 | 100.00 | 0.00 | 52 | 8.4822 | 97.53 | 1.18 | 77 | 0.9723 | 3.39 | 1.27 |
| 3 | 591.99 | 100.00 | 0.00 | 28 | 67.857 | 100.00 | 0.00 | 53 | 7.7782 | 96.35 | 1.57 | 78 | 0.8916 | 2.12 | 0.86 |
| 4 | 542.86 | 100.00 | 0.00 | 29 | 62.225 | 100.00 | 0.00 | 54 | 7.1326 | 94.78 | 2.02 | 79 | 0.8176 | 1.26 | 0.55 |
| 5 | 497.80 | 100.00 | 0.00 | 30 | 57.061 | 100.00 | 0.00 | 55 | 6.5406 | 92.76 | 2.56 | 80 | 0.7497 | 0.71 | 0.34 |
| 6 | 456.49 | 100.00 | 0.00 | 31 | 52.325 | 100.00 | 0.00 | 56 | 5.9978 | 90.20 | 3.13 | 81 | 0.6875 | 0.37 | 0.24 |
| 7 | 418.60 | 100.00 | 0.00 | 32 | 47.982 | 100.00 | 0.00 | 57 | 5.5000 | 87.07 | 3.75 | 82 | 0.6304 | 0.13 | 0.13 |
| 8 | 383.86 | 100.00 | 0.00 | 33 | 44.000 | 100.00 | 0.00 | 58 | 5.0435 | 83.32 | 4.36 | 83 | 0.5781 | 0.00 | 0.00 |
| 9 | 352.00 | 100.00 | 0.00 | 34 | 40.348 | 100.00 | 0.00 | 59 | 4.6249 | 78.96 | 4.94 | 84 | 0.5301 | 0.00 | 0.00 |
| 10 | 322.79 | 100.00 | 0.00 | 35 | 36.999 | 100.00 | 0.00 | 60 | 4.2411 | 74.02 | 5.42 | 85 | 0.4861 | 0.00 | 0.00 |
| 11 | 296.00 | 100.00 | 0.00 | 36 | 33.929 | 100.00 | 0.00 | 61 | 3.8891 | 68.60 | 5.76 | 86 | 0.4458 | 0.00 | 0.00 |
| 12 | 271.43 | 100.00 | 0.00 | 37 | 31.113 | 100.00 | 0.00 | 62 | 3.5663 | 62.84 | 5.89 | 87 | 0.4088 | 0.00 | 0.00 |
| 13 | 248.90 | 100.00 | 0.00 | 38 | 28.530 | 100.00 | 0.00 | 63 | 3.2703 | 56.95 | 5.80 | 88 | 0.3749 | 0.00 | 0.00 |
| 14 | 228.24 | 100.00 | 0.00 | 39 | 26.163 | 100.00 | 0.00 | 64 | 2.9989 | 51.15 | 5.55 | 89 | 0.3437 | 0.00 | 0.00 |
| 15 | 209.30 | 100.00 | 0.00 | 40 | 23.991 | 100.00 | 0.00 | 65 | 2.7500 | 45.60 | 5.12 | 90 | 0.3152 | 0.00 | 0.00 |
| 16 | 191.93 | 100.00 | 0.00 | 41 | 22.000 | 100.00 | 0.00 | 66 | 2.5218 | 40.48 | 4.70 | 91 | 0.2891 | 0.00 | 0.00 |
| 17 | 176.00 | 100.00 | 0.00 | 42 | 20.174 | 100.00 | 0.00 | 67 | 2.3125 | 35.78 | 4.26 | 92 | 0.2651 | 0.00 | 0.00 |
| 18 | 161.39 | 100.00 | 0.00 | 43 | 18.500 | 100.00 | 0.00 | 68 | 2.1205 | 31.52 | 3.94 | 93 | 0.2431 | 0.00 | 0.00 |
| 19 | 148.00 | 100.00 | 0.00 | 44 | 16.964 | 100.00 | 0.00 | 69 | 1.9445 | 27.58 | 3.71 | 94 | 0.2229 | 0.00 | 0.00 |
| 20 | 135.71 | 100.00 | 0.00 | 45 | 15.556 | 100.00 | 0.00 | 70 | 1.7832 | 23.87 | 3.55 | 95 | 0.2044 | 0.00 | 0.00 |
| 21 | 124.45 | 100.00 | 0.00 | 46 | 14.265 | 100.00 | 0.00 | 71 | 1.6352 | 20.32 | 3.47 | 96 | 0.1874 | 0.00 | 0.00 |
| 22 | 114.12 | 100.00 | 0.00 | 47 | 13.081 | 100.00 | 0.20 | 72 | 1.4994 | 16.85 | 3.34 | 97 | 0.1719 | 0.00 | 0.00 |
| 23 | 104.65 | 100.00 | 0.00 | 48 | 11.996 | 99.80 | 0.33 | 73 | 1.3750 | 13.51 | 3.15 | 98 | 0.1576 | 0.00 | 0.00 |
| 24 | 95.965 | 100.00 | 0.00 | 49 | 11.000 | 99.47 | 0.45 | 74 | 1.2609 | 10.36 | 2.82 | 99 | 0.1445 | 0.00 | 0.00 |
| 25 | 88.000 | 100.00 | 0.00 | 50 | 10.087 | 99.02 | 0.62 | 75 | 1.1562 | 7.54 | 2.33 | 100 | 0.1325 | 0.00 | 0.00 |

As can be seen from FIG. 1, FIG. 2, Table 2 and Table 3, prior to grinding, the particle size was distributed in the range of about 1 to 100 μm, but after grinding the particle size of at least 95.0% of the particles was concentrated in the range of 1.0 to 10.0 μm, resulting in a powder with a small, uniform particle size.

After that, the resin compositions were prepared using the fine powder of magnesium hydroxide and polypropylene pellets. Namely, resin compositions were prepared in the same manner as in Working Example 1 except for admixing 30 wt%, 35 wt%, or 40 wt% of the above-mentioned fine powder of magnesium hydroxide instead of 51 wt% of wood flour, setting the temperature of the stirred mixture prior to charging to a screw molding machine to 80°C, and setting the heating temperature of the screw molding machine to 170°C. The cases, in which the content of the fine powder of magnesium hydroxide was set to 30 wt%, 35 wt%, and 40 wt%, constituted, respectively, Working Examples 17, 18, and 19. In addition, a resin composition was also prepared in the same manner as in Working Examples 17 to 19 with the exception of admixing 40 wt% of a commercially available magnesium hydroxide powder used as a flame retardant (Kyowa Chemical Industry Co., Ltd., trade name KISUMA 5A) instead of the fine powder of magnesium hydroxide. This was Working Example 20. It was confirmed that polypropylene and magnesium hydroxide were homogeneously kneaded together in the resin compositions of Working Examples 17 to 20, in the same manner as in Working Example 1.

The density (g/cm$^3$), melt index (MI, g/10 min), tensile strength (MPa), flexural strength (MPa), flexural modulus (MPa), Izod impact value (kJ/m$^2$), and flame resistance (oxygen index, mm) of the resin compositions of Working Examples 17 to 20 were measured. The tensile strength, flexural strength, and flexural modulus were measured at a support span of 5 cm, a chart speed of 5 cm/min, and a bending speed 0.5 cm/min. In addition, the flame resistance was measured using the UL94 Horizontal Burn Test at a V=mm/min on a test specimen molded in accordance with the MST0210-03 injection molding process. The results are shown in Table 4 below. Each measurement value is an average of values obtained by measuring the respective parameter three times.

Table 4

| Working Example No. | 17 | 18 | 19 | 20 |
|---|---|---|---|---|
| Density | 1.21 | 1.22 | 1.24 | 1.25 |
| MI | 11.8 | 11.1 | 9.6 | 10 |
| Tensile strength | 22 | 23 | 23 | 21 |
| Flexural strength | 36 | 39 | 39 | 35 |
| Flexural modulus | 2285 | 2555 | 2456 | 2210 |
| Izod impact value | 23.3 | 22.2 | 20.1 | 14.7 |
| Flame resistance | 20.0 | 23.0 | 23.0 | 23.5 |

As can be seen from Table 4, all the resin compositions of Working Examples 17 to 20 possessed a high flame resistance and mechanical strength. In particular, it was found that the compositions of Working Examples 17 to 19 were highly impact resistant and exhibited Izod impact values of 20.1 to 23.3, and, furthermore, based on Working Example 17, it was found that a high flame resistance was obtained even when the amount of the added flame retardant was reduced to 30 wt%. This effect is due to the use of powders with a smaller and more uniform particle size than that of the commercially available magnesium hydroxide used as a flame retardant. Namely, using the manufacturing process of the present invention, it was possible to knead fine flame retardant powders into resin homogeneously and strike a balance between flame resistance and mechanical strength. In addition, the reduction in the amount of the added flame retardants results in a cost savings effect. Furthermore, when mixtures stirred under heating in the Henschel mixer were cooled to room temperature and charged to a molding machine, it was difficult to carry out kneading as homogeneously as in the working examples. In particular, caking of the fine powders occurred and homogeneous kneading proved impossible with mixtures comprising the finely ground magnesium hydroxide.

Working Examples 21 and 22

Next, resin compositions were prepared from polypropylene, magnesium hydroxide powder, and aluminum hydroxide powder. Namely, the resin compositions were prepared in the same manner as in Working Examples 17 to 20 with the exception of mixing 30 wt% and 10 wt%, respectively, of the natural magnesium hydroxide powder and aluminum hydroxide powder (Showa Denko K.K., trade name: Hygilite) instead of the fine powder of magnesium hydroxide. This was Working Example 21. In addition, a resin composition was prepared in the same manner as in Working Example 21 with the exception of using 20 wt% both for the natural magnesium hydroxide powder and for the aluminum hydroxide powder. This was Working Example 22. It was confirmed that polypropylene, magnesium hydroxide, and aluminum hydroxide were kneaded together homogeneously in the resin compositions of Working Examples 21 and 22, in the same manner as in Working Example 1. In addition, the physical property values of Working Examples 21 and 22 were measured in the same manner as in Working Examples 17 to 20. The results are listed in Table 5.

Table 5

| Working Example No. | 21 | 22 |
|---|---|---|
| Density | 1.2 | 1.2 |
| MI | 10.6 | 10.4 |
| Tensile strength | 20.1 | 19.5 |
| Flexural strength | 35.5 | 34.2 |
| Flexural modulus | 2189.0 | 2333.0 |
| Izod impact value | 15.0 | 15.5 |
| Flame resistance | 23.0 | 20.5 |

As can be seen from Table 5, the resin compositions of Working Examples 21 and 22 had a high flame resistance and mechanical strength suitable for practical applications. Namely, using the manufacturing process of the present invention, easily pyrolyzable aluminum hydroxide could be homogeneously kneaded into polypropylene, which has a high melting point, thereby achieving a high flame resistance and mechanical strength. In addition, when mixtures stirred under heating in the Henschel mixer were cooled to room temperature and charged to a molding machine, attempts to melt the polypropylene by heating in the molding machine caused the decomposition of the aluminum hydroxide and kneading was not successful.

INDUSTRIAL APPLICABILITY

As described above, the manufacturing process of the present invention makes it possible to knead microparticles and low-temperature decomposable additives into a resin homogeneously. Using the manufacturing process of the present invention, inorganic flame retardants, such as easily pyrolyzable aluminum hydroxide particles and caking-prone microparticulates of magnesium hydroxide, are kneaded homogeneously into resin, which makes it possible to obtain a high flame resistance and mechanical strength. Such resin compositions can be used for various applications, for instance, they are suitable for electric cable coatings, because electric cables with such coatings possess flexibility along with superior heat resistance, impact resistance, wear resistance, etc. Furthermore, the additives that can be kneaded in accordance with the manufacturing process of the present invention are not limited to inorganic flame retardants, and various other additives can be used as well. For instance, the process enables efficient recycling of waste wood because grinding waste wood or the like and kneading it into resin in accordance with the manufacturing process of the present invention permits efficient utilization of waste wood as a filler for resin compositions while preparing resin compositions of superior mechanical strength. Moreover, it permits preparation, of resin compositions possessing antibacterial and aromatic properties by kneading ground *wasabi* horseradish and tea leaf waste into resin, which presented difficulties in conventional methods.

**Claims**

1.  A manufacturing process for a resin composition comprising a kneading step of kneading a thermoplastic resin and an additive under heating, wherein, prior to the kneading step, the manufacturing process further comprises a preliminary step of pre-heating and mixing the thermoplastic resin and the additive, and transition of the mixture obtained in the preliminary step to the kneading step is carried out while maintaining a temperature reached at the end of the preliminary step, and then kneading is carried out.

2.  A manufacturing process for a resin composition comprising a kneading step of kneading a thermoplastic resin and an additive under heating, wherein, prior to the kneading step, the manufacturing process further comprises a preliminary step of pre-heating and mixing the thermoplastic resin and the additive, and the mixture obtained in the preliminary step is transitioned to the kneading step in a heated state at a reduced temperature that is lower than a temperature reached at the end of the preliminary step, and then kneaded.

3. The manufacturing process according to claims 1 or 2, wherein, when the mixture at the end of the preliminary step has a temperature of X (°C) and the mixture at the time of transition to the kneading step has a temperature of Y (°C), the condition of the formula (I) below is satisfied

$$0 \leq (X-Y) \leq 100 \tag{I}$$

4. The manufacturing process according to claims 1 or 2, wherein the preliminary step has a heating temperature in the range of 100 to 250°C.

5. The manufacturing process according to claims 1 or 2, wherein the mixture at the time of transition to the kneading step has a temperature in the range of 30 to 200°C.

6. The manufacturing process according to claims 1 or 2, wherein the kneading step has a temperature in the range of 80 to 350°C.

7. The manufacturing process according to claims 1 or 2, wherein the additive comprises an inorganic flame retardant.

8. The manufacturing process according to claim 7, wherein the inorganic flame retardant has a Mn/Mw ratio of a number-average particle size Mn to a weight-average particle size Mw in the range of 0.2 to 1.0.

9. The manufacturing process according to claim 7, wherein the inorganic flame retardant has a content of particles with a particle size of 0.70 to 15.0 µm of at least 90.0%.

10. The manufacturing process according to claim 7, wherein the inorganic flame retardant is a microparticulate obtained by grinding using fluid shear forces generated by rotating two opposed rotors respectively in the same direction or in opposing directions.

11. The manufacturing process according to claim 7, wherein the thermoplastic resin and the inorganic flame retardants have a mixing ratio such that, in terms of weight proportion, the thermoplastic resin is in the range of 0.5 to 1,000 parts per 1 part of the inorganic flame retardant.

12. The manufacturing process according to claim 7, wherein the thermoplastic resin and the inorganic flame retardants have a mixing ratio such that, in terms of weight proportion, the thermoplastic resin is in the range of 5 to 20 parts per 1 part of the inorganic flame retardant.

13. The manufacturing process according to claim 7, wherein the inorganic flame retardant comprises at least one retardant selected from the group consisting of metal hydroxides, metal carbonates, red phosphorus, and flexible graphite.

14. The manufacturing process according to claim 7, wherein the inorganic flame retardant comprises at least one retardant selected from the group consisting of magnesium hydroxide, aluminum hydroxide, calcium hydroxide, calcium carbonate, red phosphorus, and flexible graphite.

15. The manufacturing process according to claims 1 or 2, wherein the thermoplastic resin has a melting point of 70 to 350°C.

16. The manufacturing process according to claims 1 or 2, wherein, when the heating temperature of the preliminary step is Z (°C) and the melting temperature of the thermoplastic resin is T (°C), Z is in the range given by the formula (II) below

$$(T - 50) \leq Z \leq T \tag{II}$$

17. The manufacturing process according to claims 1 or 2, wherein the additive comprises at least one additive selected from the group consisting of ore powders, organic substances, plant tissue-derived powders, carbon powders, inorganic salts, and pigments.

18. The manufacturing process according to claims 1 or 2, wherein the additive comprises at least one additive selected from the group consisting of ground tourmaline, tartaric acid, ground *wasabi* horseradish, ground soybean residues, ground red pepper, ground black pepper, ground *matsutake* mushrooms, ground *shiitake* mushrooms, wood flour, ground paper, ground tea leaf waste, ground coffee residues, carbon black, talc, ground wood charcoal, ground bamboo charcoal, ground cacao bean shells, organic pigments, inorganic pigments, and calcium carbonate.

19. The manufacturing process according to claims 1 or 2, wherein the additive comprises an inorganic flame retardant, and at the time of transition to the kneading step, the mixture has a temperature in the range of 50 to 150°C.

20. The manufacturing process according to claims 1 or 2, wherein the additive comprises magnesium hydroxide, and at the time of transition to the kneading step, the mixture has a temperature in the range of 50 to 150°C.

21. The manufacturing process according to claims 1 or 2, wherein the additive comprises magnesium hydroxide and aluminum hydroxide, and at the time of transition to the kneading step, the mixture has a temperature in the range of 50 to 130°C.

22. The manufacturing process according to claims 1 or 2, wherein the additive comprises plant tissue-derived powders, and at the time of transition to the kneading step, the mixture has a temperature in the range of 30 to 100°C.

23. The manufacturing process according to claims 1 or 2, wherein the additive comprises wood flour, and at the time of transition to the kneading step, the mixture has a temperature in the range of 50 to 100°C.

24. The manufacturing process according to claims 1 or 2, wherein the thermoplastic resin comprises at least one resin selected from the group consisting of polyolefins, acrylonitrile-butadiene-styrene copolymers (ABS), acrylonitrile-styrene copolymers (AS), polystyrene (PS), polyesters, thermoplastic elastomers (thermoplastic elastomers, TPE), and thermoplastic urethanes (thermoplastic urethanes, TPU).

25. The manufacturing process according to claim 24, wherein the polyolefins comprise at least one of polyethylene (PE) and polypropylene (PP) and the polyesters comprise at least one compound selected from the group consisting of polyethylene terephthalate (PET), polylactic acid, and polyhydroxybutyrate (PHB).

26. The manufacturing process according to claims 1 or 2, wherein the thermoplastic resin is a polyolefin and the preliminary step has a heating temperature in the range of 50 to 220°C.

27. The manufacturing process according to claims 1 or 2, wherein the thermoplastic resin is a polypropylene and the preliminary step has a heating temperature in the range of 80 to 200°C.

28. The manufacturing process according to claims 1 or 2, wherein the thermoplastic resin is a polyethylene and the preliminary step has a heating temperature in the range of 60 to 180°C.

29. A resin composition prepared in accordance with the manufacturing process according to claims 1 or 2.

30. A resin product utilizing the resin composition according to claim 29.

31. A resin composition prepared in accordance with the manufacturing process according to claim 7.

32. The resin composition according to claim 31, wherein the inorganic flame retardant comprises magnesium hydroxide.

33. The resin composition according to claim 31, wherein the inorganic flame retardant comprises aluminum hydroxide and magnesium hydroxide.

34. The resin composition according to claim 31, wherein the inorganic flame retardant comprises flexible graphite and magnesium hydroxide.

35. The resin composition according to claim 31, wherein the thermoplastic resin comprises at least one resin selected from the group consisting of polyolefins, acrylonitrile-butadiene-styrene copolymers (ABS), acrylonitrile-styrene copolymers (AS), polystyrene (PS), polyesters, thermoplastic elastomers (thermoplastic elastomers, TPE), and thermoplastic urethanes (thermoplastic urethanes, TPU).

36. A resin composition according to claim 35, wherein the polyolefins comprise at least one of polyethylene (PE) and polypropylene (PP), and the polyesters comprise at least one compound selected from the group consisting of polyethylene terephthalate (PET), polylactic acid, and polyhydroxybutyrate (PHB).

37. The resin composition according to claim 31 used for electric cable coatings.

38. An electric cable comprising a coating formed from the resin composition according to claim 37.

FIG. 1

FIG. 2

<div align="center">

## INTERNATIONAL SEARCH REPORT

</div>

| | International application No. |
|---|---|
| | PCT/JP03/12863 |

**A. CLASSIFICATION OF SUBJECT MATTER**
Int.Cl$^7$ C08J3/20, C08L101/00, C08K3/00

According to International Patent Classification (IPC) or to both national classification and IPC

**B. FIELDS SEARCHED**

Minimum documentation searched (classification system followed by classification symbols)
Int.Cl$^7$ C08J3/00-3/28, C08L1/00-101/16, B29B7/00-7/94

Documentation searched other than minimum documentation to the extent that such documents are included in the fields searched

Electronic data base consulted during the international search (name of data base and, where practicable, search terms used)
WPI/L

**C. DOCUMENTS CONSIDERED TO BE RELEVANT**

| Category* | Citation of document, with indication, where appropriate, of the relevant passages | Relevant to claim No. |
|---|---|---|
| X | WO 01/25333 A (BAYER AG.), 12 April, 2001 (12.04.01), Claims; pages 22 to 24; Fig. 1 | 1-3,7-12,14, 15,17,18,24, 25,29-36 |
| Y | & JP 2003-511506 A & EP 1222231 A & DE 19947630 A & AU 200072890 A & BR 200014472 A & KR 2002039360 A & CN 1391597 A & TW 514656 A & MX 2002003396 A | 37,38 |
| X | JP 11-172009 A (Asahi Chemical Industry Co., Ltd.), 29 June, 1999 (29.06.99), Claims; Par. Nos. [0094], [0133], [0147]; Figs. 1, 2 (Family: none) | 1-6,15-17, 29-31 |

☒ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 January, 2004 (20.01.04) | 03 February, 2004 (03.02.04) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

| International application No. |
| --- |
| PCT/JP03/12863 |

C (Continuation). DOCUMENTS CONSIDERED TO BE RELEVANT

| Category* | Citation of document, with indication, where appropriate, of the relevant passages | Relevant to claim No. |
| --- | --- | --- |
| X | JP 63-189222 A (Showa Denko Kabushiki Kaisha), 04 August, 1988 (04.08.88), Claims; page 3, upper right column, line 17 to lower right column, line 10; example 1 | 1-6,15,17, 18,24-31,35, 36 |
| Y | (Family: none) | 37,38 |
| | | |
| X | JP 63-133501 A (Nippon Mektron, Ltd.), 06 June, 1988 (06.06.88), Claims; example 1 | 1-6,15-18, 24-31,35,36 |
| Y | (Family: none) | 37,38 |
| | | |
| X | JP 53-128068 A (Dynamit Nobel AG.), 08 November, 1978 (08.11.78), Claims; page 5, upper left column; page 6, upper left column; Figs. 1, 2 | 1-3,15,16, 24,25,29-31, 35,36 |
| Y | & DE 2706755 A      & FR 2380857 A & GB 1584891 A      & CH 625115 A & CA 1114122 A      & US 4616989 A & IT 1155826 B | 37,38 |
| | | |
| X | JP 50-144738 A (Sumitomo Bakelite Co., Ltd.), 20 November, 1975 (20.11.75), Claims; Fig. 1 | 1-4,15-18, 24,25,29-31, 35,36 |
| Y | (Family: none) | 37,38 |
| | | |
| X | JP 49-4298 B (Sekisui Chemical Co., Ltd.), 31 January, 1974 (31.01.74), Claims | 1-3,7-32,35, 36 |
| Y | (Family: none) | 37,38 |
| | | |
| Y | JP 2002-256118 A (Asahi Denka Kogyo Kabushiki Kaisha), 11 September, 2002 (11.09.02), Claims (Family: none) | 37,38 |
| | | |
| Y | JP 2002-128969 A (Karupu Kogyo Kabushiki Kaisha), 09 May, 2002 (09.05.02), Claims (Family: none) | 37,38 |
| | | |
| Y | JP 2001-307551 A (Idemitsu Petrochemical Co., Ltd.), 02 November, 2001 (02.11.01), Claims (Family: none) | 37,38 |
| | | |
| A | JP 11-35697 A (Kabushiki Kaisha Nippon Mizushori Giken), 09 February, 1999 (09.02.99), Claims (Family: none) | 1-38 |

Form PCT/ISA/210 (continuation of second sheet) (July 1998)

**EP 1 559 736 A1**

<table>
<tr><td colspan="2" align="center"><b>INTERNATIONAL SEARCH REPORT</b></td><td colspan="2">International application No.<br><br>PCT/JP03/12863</td></tr>
<tr><td colspan="4">C (Continuation). DOCUMENTS CONSIDERED TO BE RELEVANT</td></tr>
<tr><td>Category*</td><td colspan="2">Citation of document, with indication, where appropriate, of the relevant passages</td><td>Relevant to claim No.</td></tr>
<tr><td>A</td><td colspan="2">JP 2-62230 A (Sanwa Kako Kabushiki Kaisha),<br>02 March, 1990 (02.03.90),<br>Claims<br>(Family: none)</td><td>1-38</td></tr>
</table>

Form PCT/ISA/210 (continuation of second sheet) (July 1998)